# EUROPEAN PATENT APPLICATION

(11) **EP 1 281 430 A2**
(43) Date of publication of application: **05.02.2003**
(21) Application number: 02255247.5
(22) Date of filing: 26.07.2002
(51) Int. Cl.: B01D 53/86

(54) **Purification of gases**

(30) Priority: 03.08.2001 US 922125
(71) Applicant: THE BOC GROUP, INC., Murray Hill, New Providence, New Jersey 07974-2082 (US)
(72) Inventor: Kumar, Ravi, Allentown, PA 18103 (US); Deng, Shuguang, Hillsborough, NJ 08844 (US)
(74) Representative: Wickham, Michael

(57) **Abstract**

A process for removing water vapour, carbon dioxide, carbon monoxide and hydrogen impurities from a gaseous feed stream comprising:
a) performing a first removal of water vapour from said gaseous feed stream;
b) contacting said gaseous feed stream with a first oxidation catalyst to convert carbon monoxide to carbon dioxide;
c) removing said carbon dioxide from said feed gas stream;
d) contacting said gaseous feed stream with a second oxidation catalyst to convert hydrogen to water; and
e) performing a second removal of water vapour from said gaseous feed stream,
wherein the second oxidation catalyst comprises a noble metal carried on a hydrophobic support.

## Description

The present invention relates to a method for removing gaseous impurities from feed gas streams, particularly in a pressure swing adsorption unit. More particularly, the present invention provides for a method for removing hydrogen, carbon monoxide, water and carbon dioxide from a feed gas stream prior to its introduction into a cryogenic distillation unit.

Adsorption is well established as a unit operation for the production of pure gases, the purification of gases and their mixtures up-front, their further physical and/or chemical handling, and for the treatment of fluid waste streams. Purification and separation of atmospheric air comprises one of the main areas in which adsorption methods are widely used. For an increase of their efficiency, novel adsorbent formulations and processes of their utilization are being sought permanently.

One of the areas of strong commercial and technical interest represents pre-purification of air before its cryogenic distillation. Conventional air separation units (ASUs) for the production of nitrogen, N₂, and oxygen, O₂, and also for argon, Ar, by the cryogenic separation of air are basically comprising two or at least three, respectively, integrated distillation columns which operate at very low temperatures. Due to these low temperatures, it is essential that water vapor, H₂O, and carbon dioxide, CO₂, is removed from the compressed air feed to an ASU. If this is not done, the low temperature sections of the ASU will freeze up making it necessary to halt production and warm the clogged sections to revaporize and remove the offending solid mass of frozen gases. This can be very costly. It is generally recognized that, in order to prevent freeze up of an ASU, the content of H₂O and CO₂ in the compressed air feed stream must be less than 0.1 ppm and 1.0 ppm or lower, respectively. Besides, other contaminants such as low molecular weight hydrocarbons and nitrous oxide, N₂O, may also be present in the air feed to the cryogenic temperature distillation columns, and they must as well be removed up-front the named separation process to prevent hazardous process regime.

Current commercial methods for the pre-purification of air include reversing heat exchangers, temperature swing adsorption, pressure swing adsorption and catalytic pre-purification techniques.

Reversing heat exchangers remove water vapor and carbon dioxide by alternately freezing and evaporating them in their passages. Such systems require a large amount, typically 50 % or more, of product gas for the cleaning, i.e., regenerating of their passages. Therefore, product yield is limited to about 50 % of feed. As a result of this significant disadvantage, combined with characteristic mechanical and noise problems, the use of reversing heat exchangers as a means of air pre-purification in front of ASUs has steadily declined over recent years.

In temperature swing adsorption (TSA) pre-purification of air, the impurities are removed from air at relatively low ambient temperature, typically at about (5 - 15) ° C, and regeneration of the adsorbent is carried out at elevated temperatures, e.g., in a region of about (150 - 250)° C. The amount of product gas required for regeneration is typically only about (10 - 25) % of the product gas. Thus, a TSA process offers a considerable improvement over that of utilizing reversing heat exchangers. However, TSA processes require evaporative cooling or refrigeration units to chill the feed gas and heating units to heat the regeneration gas. They may, therefore, be disadvantageous both in terms of capital costs and energy consumption despite of being more cost-effective than the reversing heat exchangers' principle referred to above.

Pressure swing adsorption (PSA) (including pressure-vacuum swing adsorption (PVSA)) processes are an attractive alternative to TSA processes, for example, as a means of air pre-purification, since both adsorption and regeneration via desorption, are performed, as a rule, at ambient temperature. PSA processes, in general, do require substantially more regeneration gas than TSA processes. This can be disadvantageous if high recovery of cryogenically separated products is required. If a PSA air pre-purification unit is coupled to a cryogenic ASU plant, a waste stream from the cryogenic section, which is operated at a pressure close to ambient pressure, is used as purge for regenerating the adsorption beds. Feed air is passed under pressure through a layer of particles of activated alumina, to remove the bulk of H₂O and CO₂, and then through a layer of zeolite particles such as of the FAU structural type, e.g., NaX zeolite, to remove the remaining low concentrations of H₂O and CO₂. Arrangement of the adsorbent layers in this manner is noted to increase the temperature effects, i.e., temperature drops during desorption, in the PSA beds. In other configurations, only activated alumina is used to remove both H₂O and CO₂ from feed air. This arrangement is claimed to reduce the temperature effects.

In addition, some applications require the removal of H₂ and CO from the ambient air before processing in the cryogenic distillation column to produce H₂ and CO, free nitrogen, oxygen, argon and other air components. Such a process is disclosed in EP-A-438 282. EP-A-438 282 discloses a process in which a first ambient temperature oxidation catalyst is used to facilitate oxidation of carbon monoxide to carbon dioxide and a second ambient temperature oxidation catalyst is used to facilitate oxidation of hydrogen to water vapour. The catalysts are protected by an initial layer of adsorbent to remove water vapour. A final layer or layers of adsorbent are used to remove water vapour and carbon dioxide. Notwithstanding the presence of the initial layer of adsorbent we have found that the performance of the second oxidation catalyst can deteriorate over time.

According to the present invention there is provided a process for removing water vapour, carbon dioxide, carbon monoxide and hydrogen impurities from a gaseous feed stream comprising:
a) performing a first removal of water vapour from said gaseous feed stream;
b) contacting said gaseous feed stream with a first oxidation catalyst to convert carbon monoxide to carbon dioxide;
c) removing said carbon dioxide from said feed gas stream;
d) contacting said gaseous feed stream with a second oxidation catalyst to convert hydrogen to water; and
e) performing a second removal of water vapour from said gaseous feed stream,
wherein the second oxidation catalyst comprises a noble metal carried on a hydrophobic support.

Optionally, additional layers may be employed to remove trace hydrocarbons and oxides of nitrogen from the feed stream gas. Preferably, the feed stream gas is air and the impurities are removed in a pressure swing adsorption (PSA) process prior to the air being fed to a cryogenic distillation unit in an air separation unit (ASU).

The process comprises passing a feed stream gas typically air containing water vapour, carbon dioxide, carbon monoxide, and hydrogen impurities containing these impurities through a five-layer bed for the purification of the air by PSA or TSA. In the first layer, water vapour is adsorbed using a typical water adsorbent. The second layer comprises the first oxidation catalyst. In the third layer, ambient carbon dioxide and carbon dioxide generated in the second layer are removed by adsorption, typically on a zeolite. The fourth layer comprises the second oxidation catalyst. In the fifth layer, moisture generated in the fourth layer is adsorbed. The five layers are present in a single treatment zone, preferably in a single vessel which will include the three adsorbent layers and the two catalyst layers.

The first adsorbent layer may be any (selective) adsorbent of water vapour such as activated alumina, silica gel or an X type zeolite such as NaX zeolite. This layer may also be a composite of two or more of these materials.

The second layer containing the oxidation catalyst is typically a metal oxide such as a nickel oxide or mixtures of oxides of manganese and copper. Preferably, the catalyst material is a Hopcalite type catalyst such as Carulite®-300 manufactured by the Carus Chemical Company.

The third layer contains an adsorbent for carbon dioxide removal such as activated alumina, silica gel or an X type zeolite such as NaX zeolite. Preferably, the third layer adsorbent material also adsorbs any residual water vapour and may also be a composite material of two or more of these materials. The third layer type X zeolite material is preferably a sodium LSX type zeolite which is a zeolite X type material with a silicon to aluminum atomic ratio in the range between 0.9 and 1.1.

The fourth layer is a noble metal catalyst carried on a hydrophobic support, for example a hydrophobic zeolite. The catalyst is preferably a palladium based catalyst on a hydrophobic support or a catalyst comprising promoted platinum, palladium and tin oxide on a hydrophobic support available as Sofnocat® from Molecular Products Co. We believe that the hydrophobic support avoids the adsorption of water vapour by the support, such adsorption of water vapour potentially contributing to deterioration in the performance of the second oxidation catalyst over time.

The fifth layer removes the moisture generated in the fourth layer. It may be any adsorbent for water such as activated alumina, silica gel or an X type zeolite such as NaX zeolite. This layer may also be a composite of these materials.

The optional sixth and seventh layers can be employed to remove trace hydrocarbons and oxides of nitrogen. These layers may also be composite layers. Typically, the hydrocarbon adsorbent is selected from the group consisting of types A and X zeolites and silica gel. The oxides of nitrogen adsorbent is typically selected from the group consisting of zeolites types A, X or Y.

In alternative embodiments of the present invention, the steps may be performed in different sequences. For example, the step of contacting the feed stream gas with a catalyst to convert hydrogen to water may be performed before removing carbon dioxide from the feed gas stream. Also the step of removing carbon dioxide from the feed gas stream can be performed before the feed gas stream contacts an oxidation catalyst to convert carbon monoxide to carbon dioxide. Under this sequence of steps, carbon dioxide is also removed by the second water vapour removal adsorbent.

If the method according to any one of the preceding claims is performed by pressure swing adsorption process conventional operating parameters can be selected. Typically, the adsorption pressure is up to about 20 bar and the desorption pressure is less than 1 bar and may be as low as to about 0.05 bar. A pressure range of about 10 bar to about 0.15 bar is preferred and a range of about 6 bar to about 1 bar most preferred. The temperature at which the pressure swing adsorption is carried out will typically range from about 5°C to about 55°C for the adsorption step.

The invention will now be described with respect to particular examples thereof.

### EXAMPLES

### Example 1

PSA/PPU experiments were conducted in a one bed PSA unit measuring 2.14 inches in diameter and 91 inches in height. The bed was packed with 67 inches of activated alumina available from Alcan as AA300 at the bottom, 12 inches of the Carulite®-300 material, then 12 inches of Sofnocat catalyst. Table 1 lists the experimental conditions.

**Table 1**

| | |
|---|---|
| Feed Step | 12 minutes at a feed pressure of 80.5 psia and a feed temperature of 25°C, air flow rate of 3.88 scfm |
| Vent Step | 1 minute |
| Purge Step | 9 minutes, purge gas pressure of 22.7 psia and a temperature of 25°C and purge gas nitrogen flow rate of 3.5 scfm |
| Re-Pressurization Step | 2 minutes with nitrogen from the top of the bed |

Ambient air was used as feed in this example. A RGA-5CO/H2 Trace analyzer was used to measure hydrogen and carbon monoxide concentrations in the feed stream gas, the feed stream gas after the Carulite layer and product stream. Table 2 summarizes the hydrogen and carbon monoxide concentrations in the different gas streams measured during feed step after three weeks of continuous cyclic experiments.

**Table 2**

| Time | Feed End | | After Carulite | | Product | |
|---|---|---|---|---|---|---|
| | H₂(ppb) | CO(ppb) | H₂(ppb) | CO(ppb) | H₂(ppb) | CO(ppb) |
| 0 | 207.1 | 114.9 | | | | |
| 3 | | | 191.7 | 0.2 | 1.0 | 0.9 |
| 9 | | | 208.3 | 0.4 | 7.2 | 0.7 |
| 12 | | | 211.9 | 0.0 | 10.1 | 1.3 |

The results as summarized in Table 2 clearly show that carbon monoxide was completely removed by the Carulite oxidation catalyst while hydrogen was effectively removed from approximately 200 ppb to about 10 ppb by the Sofnocat oxidation catalyst under the experimental conditions.

Residual water vapour can be removed by a top layer of the actuated alumina adsorbent.

### Example 2

Experiments similar to those described in Example 1 were repeated with a higher hydrogen and carbon monoxide air feed by injecting 2% hydrogen and 3.22% carbon monoxide into the feed air. The results of this testing are given in Table 3.

**Table 3**

| Time | Feed End | | After Carulite | | Product | |
|---|---|---|---|---|---|---|
| | H₂(ppb) | CO(ppb) | H₂(ppb) | CO(ppb) | H₂(ppb) | CO(ppb) |
| 0 | 3120.5 | 5024.0 | | | | |
| 3 | | | 350.0 | 3.6 | 0.0 | 2.0 |
| 6 | | | 589.6 | 2.8 | 0.0 | 1.8 |
| 9 | | | 911.0 | 1.4 | 227.8 | 2.4 |
| 12 | | | 2417.3 | 4.1 | 546.8 | 2.6 |

As demonstrated in Table 3 and Example 2, all the carbon monoxide in the air, approximately 5000 ppb, was effectively removed by the Carulite oxidation catalyst layer. Hydrogen was partially removed by the Carulite and further removed by the Sofnocat catalyst. H₂ broke through from the product stream and reached 546.8 ppb at the end of the feed step. However, more than 95% of hydrogen in the feed air was removed by a combination of the Carulite and Sofnocat catalysts during the feed step. Residual water vapour can be removed by a top layer of actuated alumina adsorbent.

Preferably the purge nitrogen comes from the rectification column or columns of an air separation unit in the same manner as in the method according to EP-A-438 282.

## Claims

1. A process for removing water vapour, carbon dioxide, carbon monoxide and hydrogen impurities from a gaseous feed stream comprising:
a) performing a first removal of water vapour from said gaseous feed stream;
b) contacting said gaseous feed stream with a first oxidation catalyst to convert carbon monoxide to carbon dioxide;
c) removing said carbon dioxide from said feed gas stream;
d) contacting said gaseous feed stream with a second oxidation catalyst to convert hydrogen to water; and
e) performing a second removal of water vapour from said gaseous feed stream,
wherein the second oxidation catalyst comprises a noble metal carried on a hydrophobic support.

2. A process as claimed in claim 1, wherein said gaseous feed stream is air.

3. A process as claimed in claim 1or claim 2, wherein said process is a pressure swing adsorption process.

4. A process as claimed in any one of the preceding claims, wherein step (a) comprises contacting said gaseous feed stream with an adsorbent of water vapour.

5. A process as claimed in any one of the preceding claims, wherein the first oxidation catalyst comprises a mixture of manganese and copper oxides.

6. A process as claimed in any one of the preceding claims, wherein the second oxidation catalyst is a palladium based catalyst on a hydrophobic support.

7. A process as claimed in any one of the preceding claims, wherein step (c) comprises contacting said gaseous feed stream with a carbon dioxide removing adsorbent.

8. A process as claimed in any one of the preceding claims, further comprising contacting the purified gaseous feed stream with an adsorbent to remove trace hydrocarbons and oxides of nitrogen therefrom.

9. A process as claimed in any one of the preceding claims, wherein said step (d) is performed upstream of step (c).

10. A process as claimed in any one of claims 1 to 8, wherein step (c) is performed upstream of step (b).

11. A process as claimed in any one of the preceding claims, wherein step (e) comprises contacting said gaseous feed stream with a water removing adsorbent.

12. A process as claimed in any one of the preceding claims wherein water vapour is also removed in step (c ).
